# FASCICULE DE BREVET EUROPEEN

(11) **EP 0 541 470 B1**
(45) Date de publication et mention de la délivrance du brevet: **09.04.1997**
(21) Numéro de dépôt: 92440124.3
(22) Date de dépôt: 06.11.1992
(51) Int. Cl.: A01D 43/10, A01D 57/02

(54) **Faucheuse avec un rotor amenant le produit coupé notamment aux supports des organes de coupe**
Mähmaschine mit einem Rotor, welcher das geschnittene Gut insbesondere zu den Trägern der Schneidorgane bringt
Mowing machine with a rotor bringing the cut product especially to the supports of the cutting elements

(30) Priorité: 08.11.1991 FR 9114054
(43) Date de publication de la demande: 12.05.1993
(73) Titulaire: KUHN S.A., F-67700 Saverne (FR)
(72) Inventeur: Ermacora, Rino, F-67700 St Jean Saverne (FR)

(56) Documents cités:
- EP-A- 0 128 488
- EP-A- 0 383 392
- EP-A- 0 407 321
- DE-A- 1 582 331
- FR-A- 1 548 049
- FR-A- 2 090 636
- US-A- 3 400 526
- US-A- 3 402 537
- US-A- 3 613 336
- US-A- 3 835 629
- US-A- 3 977 165
- US-A- 4 445 313

## Description

La présente invention concerne une faucheuse comportant au moins un mécanisme de récolte qui comprend :
- une barre de coupe s'étendant transversalement à la direction de travail et pourvue d'organes de coupe et d'un carter, lesdits organes de coupe étant guidés chacun en rotation à la face supérieure dudit carter autour d'un axe respectif dirigé vers le haut et étant entraînés en rotation par des moyens de transmission comportant des éléments implantés dans ledit carter, ces organes de coupe comprenant chacun un support muni à sa périphérie d'au moins un outil de coupe, les outils de coupe desdits organes de coupe générant un plan de coupe, et
- un rotor comportant un support central et présentant à sa périphérie des moyens participant à l'évacuation du produit coupé par lesdits outils de coupe, ledit rotor étant agencé à cet effet au-dessus dudit plan de coupe, au moins sensiblement parallèlement à ladite barre de coupe, et étant entrainé en rotation de sorte qu'à l'avant dudit rotor, lesdits moyens se déplacent vers le bas, jusque dans le voisinage dudit plan de coupe.

Une faucheuse conditionneuse de ce type est décrite dans le brevet FR 2 090 636.

Cette faucheuse conditionneuse connue comprend un châssis mobile monté sur des roues, un timon destiné à être attelé de manière appropriée à un tracteur, et un châssis secondaire articulé sur le châssis mobile.

Le châssis secondaire comprend une plate-forme fixe inclinée vers le haut et vers l'arrière entre son bord avant et son bord arrière, deux rouleaux associés pour le traitement des plantes coupées, disposés sensiblement horizontalement et implantés à proximité du bord arrière de la plate-forme, des organes de coupe montés sur ladite plate-forme à proximité du bord avant de celle-ci et un moulinet.

Les organes de coupe comprennent chacun un support en forme de disque et plusieurs couteaux montés sur ce dernier en dépassant la périphérie de celui-ci. Chaque organe de coupe est monté sur la plate-forme de manière à tourner à grande vitesse autour d'un axe respectif orienté vers le haut. Les organes de coupe sont associés par paires. Les organes de coupe de chaque paire tournent en sens opposés l'un vers l'autre en avant du bord avant de la plate-forme.

Les disques des organes de coupe sont, quant à eux, disposés dans un plan sensiblement commun et chaque disque présente une surface supérieure libre destinée à recevoir les plantes coupées. Ces disques constituent ainsi des éléments de transport destinés à projeter les plantes coupées vers l'arrière et vers le haut sur la plate-forme.

Le moulinet tourne autour d'un axe horizontal au-dessus des organes de coupe et comporte des doigts balayant les plantes coupées résiduelles des disques afin de les déplacer vers le haut et vers l'arrière au-dessus de la plate-forme, de manière à les envoyer directement entre les rouleaux de conditionnement.

Durant le fonctionnement, les organes de coupe fauchent les plantes et les surfaces supérieures libres des disques sont destinées à supporter et à projeter les plantes coupées vers l'arrière dans les rouleaux de conditionnement. Le moulinet coopère avec les organes de coupe de manière à empêcher les plantes coupées de revenir sur ceux-ci et à les aider à diriger et répartir lesdites plantes coupées dans les rouleaux de conditionnement.

Les organes de coupe rotatifs constituent ainsi les éléments de transport principaux, tandis que le moulinet doit présenter les plantes à couper d'une façon appropriée aux organes de coupe et également constituer un organe auxiliaire transportant les plantes coupées vers les rouleaux de conditionnement, les doigts montés sur le moulinet peignant les plantes coupées derrière les organes de coupe afin d'empêcher celles-ci de revenir sur lesdits organes de coupe.

Compte tenu de la position du moulinet - les doigts de celui-ci suivent une trajectoire qui effleure la partie arrière de la surface supérieure des disques et la partie arrière de la plate-forme - il pourrait arriver que dans certaines conditions de travail des plantes coupées par les couteaux des organes de coupe restent tout de même à l'avant de la barre de coupe. Ceci créerait alors un "rouleau" de plantes coupées à l'avant de la barre de coupe, lequel "rouleau" coucherait les plantes encore sur pied qui ne pourraient alors plus être coupées par les couteaux des organes de coupe.

De surcroît, lors du travail en descente de pente, les plantes coupées par les couteaux risquent de s'accumuler à l'avant de la barre de coupe sous l'effet de la gravité et du souffle engendré par la rotation des organes de coupe.

En sus, il apparaît que le moulinet est très volumineux. La présence de doigts articulés et commandés par une came le rend de surcroît onéreux et d'utilisation et d'entretien complexes.

La demande de brevet DE 1 582 331 concerne une faucheuse rotative comportant plusieurs disques de coupe équipés de couteaux et entraînés chacun en rotation autour d'un axe de rotation respectif sensiblement vertical. A cet effet, ces disques de coupe s'étendent sous une poutre porteuse dans laquelle ils sont guidés en rotation.

Cette faucheuse connue est remarquable en ce que la poutre porteuse s'étend directement au-dessus des disques de coupe et porte des entraîneurs pour le produit coupé.

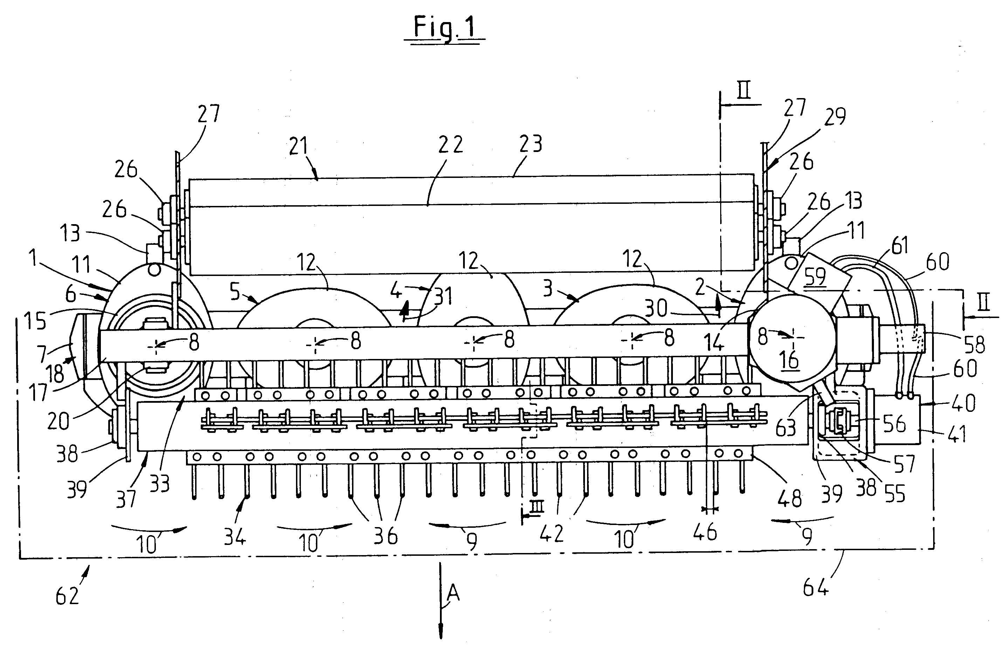

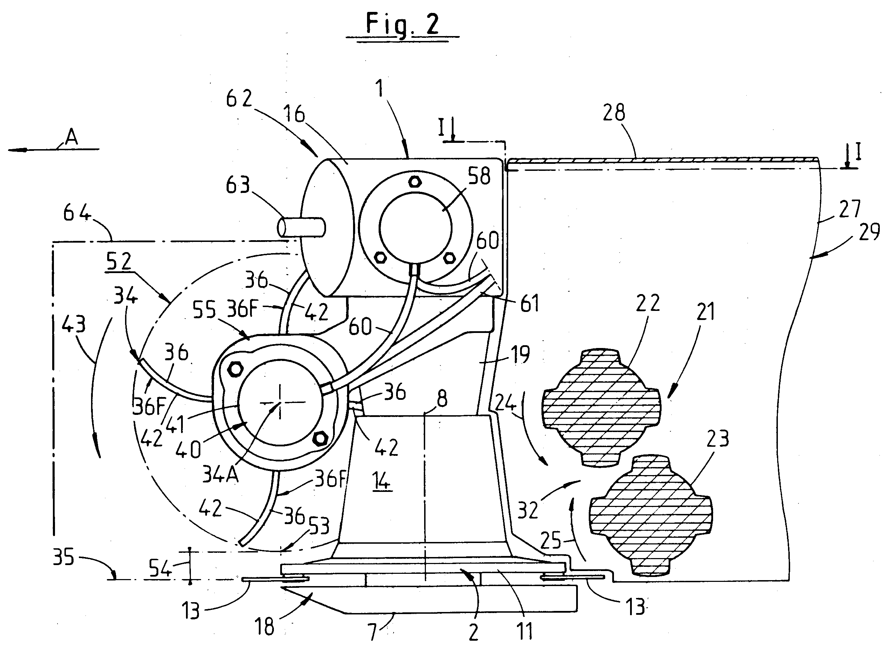

Dans l'une des solutions décrites (figures 1 et 2), ces entraîneurs sont constitués par un rotor transporteur guidé en rotation au-dessus de la poutre porteuse et pourvu de dents. L'axe de rotation du rotor transporteur entraîné s'étend horizontalement et transversalement à la direction d'avance de la faucheuse.

De surcroît, la partie frontale du rotor transporteur s'étend sensiblement à la verticale de la partie avant des disques de coupe.

Les deux disques de coupe contrarotatifs doivent projeter le produit coupé devant le rotor transporteur. Ledit rotor transporteur doit saisir ledit produit coupé et faire passer celui-ci vers l'arrière entre lui et la poutre porteuse.

Mais compte tenu de la position du rotor transporteur, cette faucheuse connue devrait au moins présenter les mêmes inconvénients que ceux de la faucheuse précédemment décrite.

Il n'est même pas exclu que dans certaines conditions, le produit coupé ne puisse même pas passer par l'étroit passage entre le rotor transporteur et la poutre porteuse qui est fixe et qui crée donc forcément une certaine action de freinage sur le produit coupé à évacuer.

La présente invention a pour but de remédier aux inconvénients de l'état de la technique.

A cet effet, la faucheuse selon l'invention est caractérisée en ce que :
a) l'axe longitudinal du rotor s'étend au moins sensiblement à la verticale de la position frontale des outils de coupe lorsque le plan de coupe est dirigé horizontalement ;
b) les moyens participant à l'évacuation du produit coupé sont liés rigidement au support central du rotor et amènent aux supports des organes de coupe le produit coupé par les outils de coupe.

Etant donné que le rotor s'étend à l'avant de la barre de coupe - son axe longitudinal s'étend au moins sensiblement à la verticale de la position frontale des outils de coupe lorsque le plan de coupe desdits outils de coupe est dirigé horizontalement - le produit coupé par lesdits outils de coupe est immédiatement et régulièrement évacué vers l'arrière grâce à l'action combinée du rotor et des supports des organes de coupe.

Le produit coupé ne risque donc pas de s'accumuler à l'avant de la barre de coupe où il gênerait le bon déroulement de la coupe.

De surcroît, cette position du rotor assure un nettoyage continuel des organes de coupe dans la zone de coupe.

Compte tenu du sens de rotation du rotor - celui-ci tourne de sorte qu'à l'avant dudit rotor les moyens participant à l'évacuation du produit coupé se déplacent vers le bas - le rotor crée également un flux d'air tendant à dresser et à présenter favorablement le produit à couper devant les organes de coupe.

Enfin, le fait de lier rigidement les moyens participant à l'évacuation du produit coupé au support central du rotor simplifie substantiellement ledit rotor et son encombrement peut être aisément réduit.

Il pourra en outre être prévu que lesdits moyens participant à l'évacuation du produit coupé soient liés au support central à l'aide d'organes de fixation. Dans une réalisation particulièrement avantageuse, ces organes de fixation pourront être des vis s'étendant au moins sensiblement dans des plans orthogonaux à l'axe longitudinal du rotor.

Il pourra également être prévu que le support central du rotor comporte une âme centrale au moins sensiblement cylindrique. Avantageusement, le rayon extérieur de cette âme centrale pourra être d'environ 7 cm.

Dans une réalisation particulièrement intéressante, il pourra de plus être prévu que le support central du rotor comporte à sa périphérie des éléments plats s'étendant au moins sensiblement parallèlement à l'axe longitudinal dudit rotor et auxquels seront fixés lesdits moyens à l'aide desdits organes de fixation par exemple.

Ces éléments plats pourront être orientés au moins sensiblement radialement et/ou être répartis régulièrement à la périphérie de l'âme centrale du support central du rotor.

Par ailleurs, le rayon extérieur du support central du rotor pourra avantageusement être compris entre 7 cm et 20 cm, avec une préférence pour environ 11 cm.

Pour permettre aux moyens participant à l'évacuation du produit coupé d'amener encore mieux ledit produit coupé notamment aux supports des organes de coupe, il pourra être avantageusement prévu que la partie frontale desdits moyens soit, compte tenu du sens de rotation du rotor et en vue suivant son axe longitudinal, dirigée vers l'arrière lors de la rotation du rotor.

En particulier l'extrémité extérieure de la partie frontale desdits moyens pourra être dirigée vers l'arrière et notamment être courbée vers l'arrière.

De préférence, la partie frontale desdits moyens pourra tout simplement être courbée vers l'arrière sur au moins sensiblement toute sa longueur. Dans ce cas, le rayon de courbure de la partie frontale desdits moyens sera avantageusement compris entre 7 cm et 50 cm, avec une préférence pour environ 15 cm.

Lesdits moyens participant à l'évacuation du produit coupé pourront être avantageusement constitués de doigts. De préférence, ces doigts seront au moins sensiblement rigides et/ou seront de section curviligne; un diamètre extérieur d'environ 1 cm s'est avéré être particulièrement avantageux.

Il pourra aussi être prévu que deux moyens participant à l'évacuation du produit coupé voisins se trouvent, en vue suivant une direction orthogonale à l'axe longitudinal du rotor, dans des plans de rotation situés à une distance inférieure à 15 cm l'un de l'autre. Dans ce cas, on assure que du produit coupé ne puisse pas passer entre deux tels moyens voisins.

Par ailleurs, les organes de coupe d'extrémité pourront être, contrairement aux organes de coupe intermédiaires, surmontés chacun d'un tambour rotatif. Dans ce cas, lesdits moyens participant à l'évacuation du produit coupé s'étendront avantageusement sur une longueur au moins sensiblement égale à la distance séparant ces deux tambours rotatifs l'un de l'autre.

En outre, lesdits moyens pourront, en vue suivant l'axe longitudinal du rotor, être avantageusement décalés angulairement de manière à former une hélice favorisant une évacuation continue du produit coupé.

De surcroît, le rayon extérieur du rotor pourra avantageusement être compris entre 12 cm et 35 cm, avec une préférence pour environ 25 cm.

Dans une réalisation particulièrement avantageuse, la position du rotor sera telle que la distance séparant le point le plus bas du rotor du plan de coupe soit inférieure à 15 cm, avec une préférence pour environ 5 cm. Il pourra même être avantageusement prévu que la position du rotor soit réglable verticalement et/ou suivant la direction de travail.

Il pourra également être prévu que l'entraînement du rotor se fasse par le sol, comme cela est souvent le cas pour l'entraînement de la distribution des semoirs.

Mais il pourra aussi être prévu que le mouvement de rotation soit amené depuis le véhicule moteur servant à déplacer la faucheuse jusqu'au rotor au moyen d'organes de transmission mécaniques du type arbres, engrenages, courroies, etc.

De préférence, le rotor sera toutefois entraîné au moyen d'un moteur autonome du type hydraulique, électrique, pneumatique, etc.

Dans ce cas, il sera prévu que le moteur soit implanté au moins sensiblement dans le voisinage de l'une des deux extrémités longitudinales du rotor.

Le moteur pourra en outre être au moins sensiblement centré sur l'axe longitudinal du rotor. De cette sorte, son arbre d'entraînement pourra être aisément lié en rotation avec le support central du rotor au moyen d'un accouplement.

Une solution particulièrement avantageuse consistera à utiliser un moteur hydraulique alimenté par une pompe hydraulique implantée sur la faucheuse ; cette pompe hydraulique pourra être à débit variable.

Il va sans dire que ces exemples de réalisation de source motrice ne sont nullement limitatifs.

Quelle que soit la source motrice utilisée, il est avantageux que le régime de rotation du rotor dépasse 120 tr/mn avec une préférence pour environ 240 tr/mn. Cette source motrice pourra également être à régime variable, ce qui permet une meilleure adaptation du régime de rotation du rotor au type de produit à récolter.

Il pourra du reste être prévu que le mécanisme de récolte comprenne en sus un dispositif de traitement du produit coupé agencé derrière la barre de coupe.

L'invention s'applique d'ailleurs tout particulièrement aux faucheuses dont le dispositif de traitement comporte deux rouleaux de conditionnement entre lesquels passe le produit coupé par les organes de coupe de la barre de coupe en vue de son traitement.

Dans ce dernier cas, le rotor présente encore un avantage supplémentaire. En effet, étant donné que les rouleaux de conditionnement font généralement écran au flux d'air générés par les organes de coupe lors de leur rotation, il apparaît, aux endroits où les outils de coupe des organes de coupe intermédiaires se déplacent dans le sens d'avance au travail, des flux d'air transportant du produit coupé vers l'avant. Grâce au rotor selon l'invention, ce produit coupé ne risque plus d'être projeté devant la barre de coupe, mais sera évacué vers l'arrière par le rotor et les supports des organes de coupe pour être happé ensuite par les rouleaux de conditionnement.

D'autres caractéristiques et avantages de l'invention apparaissent dans la description suivante d'un exemple non limitatif de réalisation de l'invention faite en référence au dessin annexé sur lequel :
- la figure 1 représente une vue de dessus, partiellement en coupe suivant la surface I-I définie sur la figure 2, d'une faucheuse selon l'invention.
- la figure 2 représente une vue latérale, partiellement en coupe suivant la surface II-II définie sur la figure 1, de ladite faucheuse.
- la figure 3 représente une coupe du rotor, suivant la surface III définie sur la figure 1, équipant ladite faucheuse.

La faucheuse représentée sur les figures 1 à 3 comporte un groupe de fauche (1) muni de manière non limitative de cinq organes de coupe (2, 3, 4, 5, 6). Les organes de coupe (2, 3, 4, 5, 6) sont guidés en rotation à la face supérieure d'un carter (7) et tournent chacun autour d'un axe (8) dirigé vers le haut. Certains organes de coupe (2 et 4) tournent dans le sens défini par les flèches (9), tandis que les autres organes de coupe (3, 5 et 6) tournent dans le sens contraire défini par les flèches (10).

Les organes de coupe (2, 3, 4, 5, 6) sont disposés suivant une rangée s'etendant au moins sensiblement perpendiculairement à la direction d'avance (A) au travail. Chaque organe de coupe (2, 3, 4, 5, 6) est constitué par un support d'outils de coupe (11, 12) muni à sa périphérie de deux outils de coupe (13). Les organes de coupe d'extrémité (2, 6), contrairement aux organes de coupe intermédiaires (3, 4, 5), sont, en sus, munis chacun d'un tambour rotatif (14, 15) gui surmonte le support d'outils de coupe (11) correspondant.

Au-dessus de l'organe de coupe d'extrémité (2) est agencé un carter de renvoi (16) destiné à transmettre le mouvement aux organes de coupe (2, 3, 4, 5, 6).

Au-dessus des organes de coupe (2, 3, 4, 5, 6) est, par ailleurs, prévue une poutre porteuse (17) gui s'étend à une certaine distance au-dessus des organes de coupe (2, 3, 4, 5, 6), au moins sensiblement dans le plan contenant les axes de rotation (8) desdits organes de coupe (2, 3, 4, 5, 6) et au moins sensiblement parallèlement au carter (7). Cette poutre porteuse (17) est liée à l'une de ses extrémités longitudinales au carter de renvoi (16).

La barre de coupe (18), formée par le carter (7) et les organes de coupe (2, 3, 4, 5, 6) qu'il porte, est liée au carter de renvoi (16) au moyen d'un fût (19) (figure 2) et à l'extrémité longitudinale de la poutre porteuse (17), éloignée du carter de renvoi (16), au moyen d'une jambe (20) (figure 1).

Derrière le groupe de fauche (1) s'étend un dispositif de traitement (21) du produit coupé. Ce dispositif de traitement (21) comporte deux rouleaux de conditionnement (22, 23) qui s'étendent sensiblement l'un au-dessus de l'autre et au moins sensiblement perpendiculairement à la direction d'avance (A) au travail. Ces rouleaux de conditionnement (22, 23) tournent autour de leur axe longitudinal respectif et en sens inverses suivant les flêches (24, 25) définies sur la figure 2, de sorte que le produit coupé par les organes de coupe (2, 3, 4, 5, 6) passe entre lesdits rouleaux de conditionnement (22, 23) pour y subir le traitement souhaité. Ces rouleaux de conditionnement (22, 23) sont guidés chacun en rotation dans des paliers (26) aménagés sur des parois latérales (27). Ces parois latérales (27) s'étendent au moins sensiblement verticalement et au moins sensiblement suivant la direction d'avance (A) au travail. A leur extrémité supérieure respective, les deux parois latérales (27) sont liées entre elles par un capot (28) au moins sensiblement horizontal. Ce capot (28) et les deux parois latérales (27) forment ainsi un canal de conditionnement (29) qui fait partie du dispositif de traitement (21) et dans lequel s'étendent les deux rouleaux de conditionnement (22, 23).

Au travail, les organes de coupe (2, 4) tournent dans le sens de rotation (9), tandis que les organes de coupe (3, 5 et 6) tournent dans le sens de rotation contraire (10). Ainsi, en considérant la figure 1, il apparait, en partant de la droite de la figure vers la gauche, que l'organe de coupe d'extrémité droit (2) et le premier organe de coupe intermédiaire (3) forment une paire d'organes de coupe (2 ; 3) contrarotatifs, dont les sens de rotation (9 ; 10) respectifs convergent à l'avant du carter (7). De même, le deuxième organe de coupe intermédiaire (4) et le troisième organe de coupe intermédiaire (5) forment également une paire d'organes de coupe (4 ; 5) contrarotatifs, dont les sens de rotation (9 ; 10) respectifs convergent également à l'avant du carter (7). L'organe de coupe d'extrémité gauche (6), quant à lui, tourne dans le sens de rotation (10) contraire au sens de rotation (9) de l'organe de coupe d'extrémité droit (2), de sorte à amener le produit qu'il a coupé, à l'intérieur du canal de conditionnement (29). Le produit coupé par chaque paire d'organes de coupe (2, 3 ; 4, 5) contrarotatifs est ainsi sensiblement concentré dans la partie médiane (30 ; 31) entre les deux organes de coupe (2, 3 ; 4, 5) de ladite paire, puis est projeté vers l'arrière dans la zone de happement (32) (figure 2) des deux rouleaux de conditionnement (22, 23). Une partie du produit coupé par l'organe de coupe d'extrémité gauche (6) est concentré dans la zone (33) située du côté du tambour (15) en regard de l'organe de coupe intermédiaire (5) adjacent, puis est projeté par ledit organe de coupe d'extrémité (6) transversalement à la direction de travail (A) vers l'organe de coupe (5) pour parvenir dans le canal de conditionnement (29) au travers de la partie médiane (31).

A l'avant du groupe de fauche (1) s'étend encore un rotor (34). Le rotor (34) est agencé au-dessus du plan de coupe (35) (figure 2) du groupe de fauche (1), à l'avant dudit groupe de fauche (1) et de sorte que l'axe longitudinal (34A) du rotor (34) s'étende au moins sensiblement parallèlement au carter (7) de la barre de coupe (18). Le rotor (34) comporte des moyens (36) participant à l'évacuation du produit coupé par les organes de coupe (2, 3, 4, 5, 6) ainsi qu'un support central (37) auquel sont liés rigidement lesdits moyens (36). Dans le voisinage de chacune de ses extrémités longitudinales, le support central (37) du rotor (34) est guidé en rotation dans des paliers (38) aménagés sur des parois latérales (39). Ces parois latérales (39) s'étendent au moins sensiblement verticalement et au moins sensiblement suivant la direction d'avance (A) au travail. A leur extrémité arrière, ces deux parois latérales (39) sont fixées directement ou indirectement à la poutre porteuse (17) du groupe de fauche (1) de manière à supporter le rotor (34). L'entraînement du rotor (34) s'effectue au moyen d'une source motrice (40), de telle sorte qu'à l'avant du rotor (34) lesdits moyens (36) se déplacent vers le bas. Cette source motrice (40) qui, dans cet exemple de réalisation, est un moteur hydraulique (41), sera décrite plus en détail ultérieurement.

Avantageusement, les moyens (36) participant à l'évacuation du produit coupé sont des doigts rigides (42), de section curviligne et agencés sensiblement radialement par rapport à l'axe longitudinale (34A) du rotor (34). Compte tenu du sens de rotation (43) du rotor (34), la partie frontale (36F) de chaque doigt (42) est courbée vers l'arrière sur au moins sensiblement toute sa longueur. Dans l'exemple représenté sur les figures 1 à 3, le diamètre (44) des doigts (42) est d'environ 1 cm et leur rayon de courbure (45) est approximativement de 15 cm.

Par ailleurs, deux doigts (42) voisins se trouvent dans des plans de rotation situés à une distance (46) inférieure à 15 cm l'un de l'autre. En effet, pour que l'ensemble du produit coupé puisse être évacué vers l'arrière par le rotor (34), les doigts (42) doivent être agencés relativement près l'un de l'autre et sur une longueur au moins sensiblement égale à la distance séparant les deux tambours rotatifs (14, 15) l'un de l'autre. Vus suivant l'axe longitudinal (34A) du rotor (34), les doigts (42) sont aussi décalés angulairement de sorte à former une hélice facilitant l'évacuation continue du produit coupé.

Le support central (37) du rotor (34), quant à lui, se compose d'une âme centrale (47) de forme au moins sensiblement cylindrique et pourvue à sa périphérie d'éléments plats (48) s'étendant au moins sensiblement parallèlement à l'axe longitudinal (34A) du rotor (34). Vus suivant l'axe longitudinal (34A), les éléments plats (48), au nombre de 4 dans cet exemple de réalisation, sont orientés au moins sensiblement radialement et sont répartis régulièrement à la périphérie de l'âme centrale (47) dans le but de tenir les doigts (42). Les doigts (42) sont en effet tenus entre ces éléments plats (48) et des éléments plats complémentaires (48') au moyen d'organes de fixation (49) de type vis ou boulons s'étendant au moins sensiblement dans des plans orthogonaux à l'axe longitudinal (34A) du rotor (34). Dans l'exemple représenté, le rayon extérieur (50) de l'âme centrale (47) est d'environ 7 cm et le rayon extérieur (51) du support central (37) est à peu près de 11 cm.

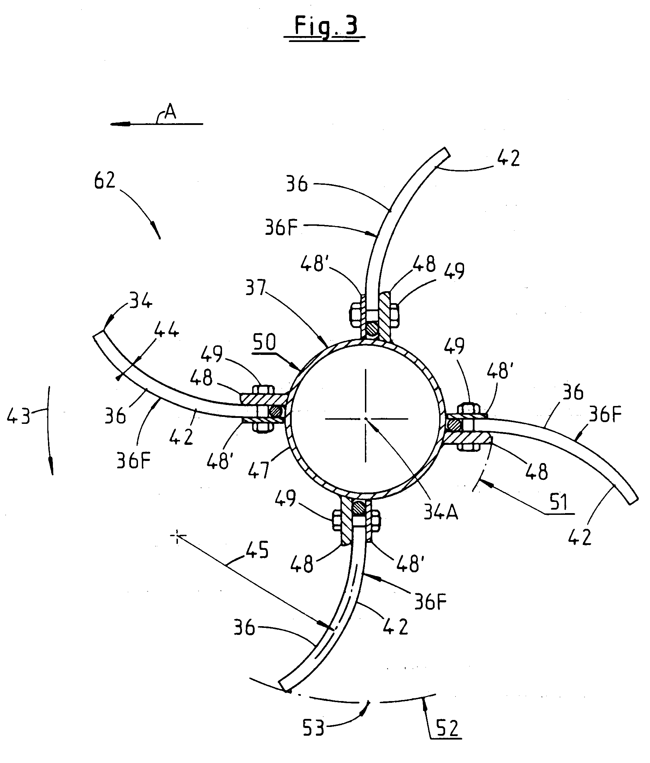

Comme le montrent les figures 2 et 3, le rotor (34) présente, quant à lui, un rayon extérieur (52) d'environ 25 cm et son point (53) le plus bas s'étend approximativement à une distance (54) de 5 cm au-dessus du plan de coupe (35). En outre, l'axe longitudinal (34A) du rotor (34) s'étend au moins sensiblement à la verticale de la position frontale des outils de coupe (13) lorsque le plan de coupe (35) s'étend horizontalement. Grâce à ce rotor (34), la faucheuse selon l'invention présente plusieurs avantages.

En effet, étant donné que le rotor (34) s'étend à l'avant de la barre de coupe (18), le produit coupé par les outils de coupe (13) est immédiatement et régulièrement amené par le rotor (34) notamment au support d'outils de coupe (11, 12) qui le transmettent au travers des parties médianes (30, 31) au dispositif de traitement (21). Ce faisant, on obtient une alimentation régulière des rouleaux de conditionnement (22, 23) en produits coupés et on évite que du produit coupé ne soit projeté à nouveau devant la barre de coupe (18) par les organes de coupe (2, 3, 4, 5, 6).

Par ailleurs, l'agencement avantageux du rotor (34) assure un nettoyage continuel des organes de coupe (2, 3, 4, 5, 6) dans la zone de coupe.

De plus, lors du travail en descente de pente, le produit coupé ne risque pas de s'accumuler à l'avant de la barre de coupe (18) sous l'effet de la gravité et du souffle engendré par la rotation des organes de coupe (2, 3, 4, 5, 6).

Compte tenu de son sens de rotation (43), le rotor (34) crée aussi un flux d'air tendant à dresser et à présenter favorablement le produit à couper devant les organes de coupe (2, 3, 4, 5, 6).

Le fait de lier rigidement les moyens (36) participant à l'évacuation du produit coupé au support central (37) du rotor (34) simplifie également substantiellement ledit rotor (34).

Grâce à sa conception relativement simple, le rotor (34) présente aussi un encombrement particulièrement réduit.

Sur les figures 1 et 2 apparaît également le moteur hydraulique (41) servant à entraîner le rotor (34) en rotation autour de son axe longitudinal (34A). Le moteur (41) est fixé au groupe de fauche (1) au moyen d'un support (55), dans le voisinage de l'extrémité longitudinale du rotor (34) située près du carter de renvoi (16). Le support (55) comporte avantageusement l'une des paroi (39) qui supporte l'un des paliers (38) du rotor (34) et permet d'implanter le moteur (41) de telle manière que son arbre d'entraînement (56) puisse être lié en rotation avec le support central (37) du rotor (34) par l'intermédiaire d'un accouplement (57). L'alimentation en huile du moteur hydraulique (41) est réalisée au moyen d'une pompe hydraulique (58) animée depuis le carter de renvoi (16) et qui pompe l'huile d'un réservoir (59), fixé au groupe de fauche (1), dans le moteur (41) au travers de deux conduites flexibles (60). L'huile utilisée par le moteur (41), quant à elle, retourne au réservoir (59) au travers de la conduite flexible (61).

Au travail, il est prévu que le moteur hydraulique (41) entraîne le rotor (34) à un régime de rotation d'environ 240 tr/mn.

L'entraînement du mécanisme de récolte (62) composé principalement par le groupe de fauche (1), le dispositif de traitement (21) et le rotor (34), est réalisé à partir de l'arbre d'entrée (63) du carter de renvoi (16) du groupe de fauche (1). Le mouvement de rotation est ensuite communiqué d'une part aux organes de coupe (2, 3, 4, 5, 6) de la barre de coupe (18) par l'intermédiaire de moyens de tranmisssion connus de l'homme de l'art et implantés dans le fût (19), le tambour rotatif (14) et le carter (7). D'autre part, le mouvement de rotation est également communiqué à l'un (23) des rouleaux de conditionnement (22, 23) par des moyens d'entraînement connus, mais non représentés. Du reste, le mouvement de rotation est encore transmis au rotor (34) au moyen d'engrenages (non repésentés), de la pompe hydraulique (58) et du moteur hydraulique (41).

Sur les figures 1 et 2, on peut encore voir un protecteur (64) représenté en traits mixtes dans sa position de travail. Celui-ci entoure principalement l'avant du mécanisme de récolte (62).

Finalement, différentes modifications restent possibles sans pour autant sortir du domaine de protection défini par les revendications. C'est ainsi notamment, que dans l'exemple de réalisation décrit il est parfaitement possible de remplacer les moyens (36) rigides par des moyens (36) semi-rigides.

## Revendications

1. Faucheuse comportant au moins un mécanisme de récolte (62) qui comprend :
- une barre de coupe (18) s'étendant transversalement à la direction de travail (A) et pourvue d'organes de coupe (2, 3, 4, 5, 6) et d'un carter (7), lesdits organes de coupe (2, 3, 4, 5, 6) étant guidés chacun en rotation à la face supérieure dudit carter (7) autour d'un axe respectif (8) dirigé vers le haut et étant entraînés en rotation par des moyens de transmission comportant des éléments implantés dans ledit carter (7), ces organes de coupe (2, 3, 4, 5, 6) comprenant chacun un support (11, 12) muni à sa périphérie d'au moins un outil de coupe (13), les outils de coupe (13) desdits organes de coupe (2, 3, 4, 5, 6) générant un plan de coupe (35), et
- un rotor (34) comportant un support central (37) et présentant à sa périphérie des moyens (36) participant à l'évacuation du produit coupé par lesdits outils de coupe (13), ledit rotor (34) étant agencé à cet effet au-dessus dudit plan de coupe (35), au moins sensiblement parallèlement à ladite barre de coupe (18), et étant entraîné en rotation de sorte qu'à l'avant dudit rotor (34), lesdits moyens (36) se déplacent vers le bas, jusque dans le voisinage dudit plan de coupe (35),
***caractérisée en ce que*** :
- l'axe longitudinal (34A) du rotor (34) s'étend au moins sensiblement à la verticale de la position frontale des outils de coupe (13) lorsque le plan de coupe (35) est dirigé horizontalement, et
- les moyens (36) participant à l'évacuation du produit coupé sont liés rigidement au support central (37) du rotor (34) et amènent aux supports (11, 12) des organes de coupe (2, 3, 4, 5, 6) le produit coupé par les outils de coupe (13).

2. Faucheuse selon la revendication 1, ***caractérisée en ce que*** lesdits moyens (36) sont liés au support central (37) à l'aide d'organes de fixation (49).

3. Faucheuse selon la revendication 2, ***caractérisée en ce que*** lesdits organes de fixation (49) sont des vis s'étendant au moins sensiblement dans des plans orthogonaux à l'axe longitudinal (34A) du rotor (34).

4. Faucheuse selon l'une au moins des revendications 1 à 3, ***caractérisée en ce que*** le support central (37) du rotor (34) comporte une âme centrale (47) au moins sensiblement cylindrique.

5. Faucheuse selon la revendication 4, ***caractérisée en ce que*** le rayon extérieur (50) de l'âme centrale (47) est d'environ 7 cm.

6. Faucheuse selon l'une au moins des revendications 1 à 5, ***caractérisée en ce que*** le support central (37) du rotor (34) comporte à sa périphérie des éléments plats (48) s'étendant au moins sensiblement parallèlement à l'axe longitudinal (34A) dudit rotor (34) dans le but de tenir les moyens (36) participant à l'évacuation du produit coupé.

7. Faucheuse selon la revendication 6, ***caractérisée en ce que*** les éléments plats (48) sont orientés au moins sensiblement radialement.

8. Faucheuse selon la revendication 6 ou 7, ***caractérisée en ce que*** les éléments plats (48) sont répartis régulièrement à la périphérie de l'âme centrale (47) du support central (37) du rotor (34).

9. Faucheuse selon l'une au moins des revendications 1 à 8, ***caractérisée en ce qu*****e** le rayon extérieur (51) du support central (37) du rotor (34) est compris entre 7 cm et 20 cm.

10. Faucheuse selon la revendication 9, ***caractérisée en ce que*** le rayon extérieur (51) du support central (37) du rotor (34) est d'environ 11 cm.

11. Faucheuse selon l'une au moins des revendications 1 à 10, ***caractérisée en ce que*** la partie frontale (36F) des moyens (36) participant à l'évacuation du produit coupé est, compte tenu du sens de rotation (43) du rotor (34) et en vue suivant son axe longitudinal (34A), dirigée vers l'arrière lors de la rotation du rotor (34).

12. Faucheuse selon la revendication 11, ***caractérisée en ce qu***'en particulier l'extrémité extérieure de la partie frontale (36F) des moyens (36) participant à l'évacuation du produit coupé est dirigée vers l'arrière.

13. Faucheuse selon la revendication 12, ***caractérisée en ce que*** l'extrémité extérieure de la partie frontale (36F) des moyens (36) participant à l'évacuation du produit coupé est courbée vers l'arrière.

14. Faucheuse selon l'une au moins des revendications 1 à 13, ***caractérisée en ce que*** la partie frontale (36F) des moyens (36) participant à l'évacuation du produit coupé est, compte tenu du sens de rotation (43) du rotor (34) et en vue suivant son axe longitudinal (34A), courbée vers l'arrière sur au moins sensiblement toute sa longueur.

15. Faucheuse selon la revendication 14, ***caractérisée en ce que*** le rayon de courbure (45) de la partie frontale (36F) des moyens (36) participant à l'évacuation du produit coupé est compris entre 7 cm et 50 cm.

16. Faucheuse selon l'une au moins des revendications 1 à 15, ***caractérisée en ce que*** les moyens (36) participant à l'évacuation du produit coupé sont constitués de doigts (42).

17. Faucheuse selon la revendication 16, ***caractérisée en ce que*** les doigts (42) sont au moins sensiblement rigides.

18. Faucheuse selon la revendication 16 ou 17, ***caractérisée en ce que*** les doigts (42) sont de section curviligne.

19. Faucheuse selon la revendication 18, ***caractérisée en ce que*** le diamètre (44) des doigts (42) est d'environ 1 cm.

20. Faucheuse selon l'une au moins des revendications 1 à 19, ***caractérisée en ce que*** deux moyens (36) participant à l'évacuation du produit coupé voisins se trouvent, en vue suivant une direction orthogonale à l'axe longitudinal (34A) du rotor (34), dans des plans de rotation situés à une distance (46) inférieure à 15 cm l'un de l'autre.

21. Faucheuse selon l'une au moins des revendications 1 à 20, ***caractérisée en ce que*** les organes de coupe d'extrémité (2,6) sont, contrairement aux organes de coupe intermédiaires (3, 4, 5), surmontés chacun d'un tambour rotatif (14, 15), et que lesdits moyens (36) participant à l'évacuation du produit coupé s'étendent sur une longueur au moins sensiblement égale à la distance séparant les deux tambours rotatifs (14, 15) l'un de l'autre.

22. Faucheuse selon l'une au moins des revendications 1 à 21, ***caractérisée en ce que*** les moyens (36) participant à l'évacuation du produit coupé sont, en vue suivant l'axe longitudinal (34A) du rotor (34), décalés angulairement de sorte à former une hélice favorisant une évacuation continue du produit coupé.

23. Faucheuse selon l'une au moins des revendications 1 à 22, **caractérisée en ce que** le rayon extérieur (52) du rotor (34) est compris entre 12 cm et 35 cm.

24. Faucheuse selon la revendication 23, ***caractérisée en ce que*** le rayon extérieur (52) du rotor (34) est d'environ 25 cm.

25. Faucheuse selon l'une au moins des revendications 1 à 24, ***caractérisée en ce que*** la distance (54) séparant le point (53) le plus bas du rotor (34) du plan de coupe (35) est inférieure à 15 cm.

26. Faucheuse selon la revendication 25, ***caractérisée en ce que*** ladite distance (54) est d'environ 5 cm.

27. Faucheuse selon l'une au moins des revendications 1 à 26, ***caractérisée en ce que*** le rotor (34) est entrainé par un moteur (41).

28. Faucheuse selon la revendication 27, ***caractérisée en ce que*** le moteur (41) est implanté au moins sensiblement dans le voisinage de l'une des deux extrémités longitudinales du rotor (34).

29. Faucheuse selon la revendication 28, ***caractérisée en ce que*** le moteur (41) est au moins sensiblement centré sur l'axe longitudinal (34A) du rotor (34).

30. Faucheuse selon la revendication 29, ***caractérisée en ce que*** l'arbre d'entraînement (56) du moteur (41) est lié en rotation avec le support central (37) du rotor (34) au moyen d'un accouplement (57).

31. Faucheuse selon l'une au moins des revendications 27 à 30, **caractérisée en *ce que*** le moteur (41) est un moteur hydraulique alimenté par une pompe hydraulique (58) implantée sur la faucheuse (1).

32. Faucheuse selon l'une au moins des revendications 1 à 31, ***caractérisée en ce que*** le régime de rotation du rotor (34) est supérieur à 120 tr/mn.

33. Faucheuse selon la revendication 32, ***caractérisée en ce que*** le régime de rotation du rotor (34) est d'environ 240 tr/mn.

34. Faucheuse selon l'une au moins des revendications 1 à 33, ***caractérisée en ce que*** le mécanisme de récolte (62) comprend en sus un dispositif (21) de traitement du produit coupé agencé derrière la barre de coupe (18).

35. Faucheuse selon la revendication 34, caractérisée en ce que le dispositif (21) de traitement comprend deux rouleaux de conditionnement (22, 23) entre lesquels passe le produit coupé par les organes de coupe (2, 3, 4, 5, 6) de la barre de coupe (18).

## Claims

1. Mower including at least one harvesting mechanism (62) which comprises:
- a cutterbar (18) extending transversely to the direction of work (A) and provided with cutting members (2,3,4,5,6) and with a casing (7), the said cutting members (2,3,4,5,6) each being guided in rotation at the upper face of the said casing (7) about a respective upwards-pointing axis (8) and being driven in rotation by transmission means including elements housed in the said casing (7), these cutting members (2, 3,4,5,6) each comprising a support (11,12) equipped at its periphery with at least one cutting tool (13), the cutting tools (13) of the said cutting members (2,3,4,5,6) generating a cutting plane (35), and
- a rotor (34) including a central support (37) and exhibiting at its periphery means (36) which play a part in evacuating the product cut by the said cutting tools (13), the said rotor (34) being arranged for this purpose above the said cutting plane (35), at least substantially parallel to the said cutterbar (18) and being driven in rotation in such a way that ahead of the said rotor (34), the said means (36) move downwards, until they are close to the said cutting plane (35),
***characterized in*** that:
- the longitudinal axis (34A) of the rotor (34) extends at least substantially vertically in line with the frontal position of the cutting tools (13) when the cutting plane (35) points horizontally, and
- the means (36) playing a part in evacuating the cut product are rigidly connected to the central support (37) of the rotor (34) and bring the product cut by the cutting tools (13) to the supports (11,12) of the cutting members (2,3,4,5,6).

2. Mower according to Claim 1, ***characterized in*** that the said means (36) are connected to the central support (37) using fixing members (49).

3. Mower according to Claim 2, ***characterized in*** that the said fixing members (49) are screws extending at least substantially in planes orthogonal to the longitudinal axis (34A) of the rotor (34).

4. Mower according to at least one of Claims 1 to 3, ***characterized in*** that the central support (37) of the rotor (34) includes an at least substantially cylindrical central core (47).

5. Mower according to Claim 4, ***characterized in*** that the outside radius (50) of the central core (47) is approximately 7 cm.

6. Mower according to at least one of Claims 1 to 5, ***characterized in*** that the central support (37) of the rotor (34) includes at its periphery flat elements (48) extending at least substantially parallel to the longitudinal axis (34A) of said rotor (34) for the purpose of holding the means (36) playing a part in evacuating the cut product.

7. Mower according to Claim 6, ***characterized in*** that the flat elements (48) are directed at least substantially radially.

8. Mower according to Claim 6 or 7, ***characterized in*** that the flat elements (48) are distributed evenly at the periphery of the central core (47) of the central support (37) of the rotor (34).

9. Mower according to at least one of Claims 1 to 8, ***characterized in*** that the outside radius (51) of the central support (37) of the rotor (34) lies between 7 cm and 20 cm.

10. Mower according to Claim 9, ***characterized in*** that the outside radius (51) of the central support (37) of the rotor (34) is approximately 11 cm.

11. Mower according to at least one of Claims 1 to 10, ***characterized in*** that the front part (36F) of the means (36) playing a part in evacuating the cut product is, bearing in mind the direction of rotation (43) of the rotor (34), and when viewed along its longitudinal axis (34A), pointing backwards as the rotor (34) rotates.

12. Mower according to Claim 11, ***characterized in*** that in particular, the outer end of the front part (36F) of the means (36) playing a part in evacuating the cut product points backwards.

13. Mower according to Claim 12, ***characterized in*** that the outer end of the front part (36F) of the means (36) playing a part in evacuating the cut product is curved backwards.

14. Mower according to at least one of Claims 1 to 13, ***characterized in*** that the front part (36F) of the means (36) playing a part in evacuating the cut product is, bearing in mind the direction of rotation (43) of the rotor (34), and when viewed along its longitudinal axis (34A), curved backwards over at least substantially its entire length.

15. Mower according to Claim 14, ***characterized in*** that the radius of curvature (45) of the front part (36F) of the means (36) playing a part in evacuating the cut product lies between 7 cm and 50 cm.

16. Mower according to at least one of Claims 1 to 15, ***characterized in*** that the means (36) playing a part in evacuating the cut product consist of fingers (42).

17. Mower according to Claim 16, ***characterized in*** that the fingers (42) are at least substantially rigid.

18. Mower according to Claim 16 or 17, ***characterized in*** that the fingers (42) are of curvilinear section.

19. Mower according to Claim 18, ***characterized in*** that the diameter (44) of the fingers (42) is approximately 1 cm.

20. Mower according to at least one of Claims 1 to 19, ***characterized in*** that two neighbouring means (36) playing a part in evacuating the cut product lie, when viewed in a direction orthogonal to the longitudinal axis (34A) of the rotor (34), in planes of rotation situated at a distance (46) less than 15 cm apart.

21. Mower according to at least one of Claims 1 to 20, ***characterized in*** that the end cutting members (2, 6) are, by contrast from the intermediate cutting members (3, 4, 5) each surmounted by a rotary drum (14, 15), and that the said means (36) playing a part in evacuating the cut product extend along a length at least substantially equal to the distance separating the two rotary drums (14, 15) from one another.

22. Mower according to at least one of Claims 1 to 21, ***characterized in*** that the means (36) playing a part in evacuating the cut product are, when viewed along the longitudinal axis (34A) of the rotor (34), angularly offset in such a way as to form a helix which favours continuous evacuation of the cut product.

23. Mower according to at least one of Claims 1 to 22, ***characterized in*** that the outside radius (52) of the rotor (34) lies between 12 cm and 35 cm.

24. Mower according to Claim 23, ***characterized in*** that the outer radius (52) of the rotor (34) is approximately 25 cm.

25. Mower according to at least one of Claims 1 to 24, ***characterized in*** that the distance (54) separating the lowermost point (53) of the rotor (34) from the cutting plane (35) is less than 15 cm.

26. Mower according to Claim 25, ***characterized in*** that the said distance (54) is approximately 5 cm.

27. Mower according to at least one of Claims 1 to 26, ***characterized in*** that the rotor (34) is driven by a motor (41).

28. Mower according to Claim 27, ***characterized in*** that the motor (41) is housed at least substantially close to one of the two longitudinal ends of the rotor (34).

29. Mower according to Claim 28, ***characterized in*** that the motor (41) is at least substantially centred on the longitudinal axis (34A) of the rotor (34).

30. Mower according to Claim 29, ***characterized in*** that the drive shaft (56) of the motor (41) is rotationally connected to the central support (37) of the rotor (34) by means of a coupling (57).

31. Mower according to at least one of Claims 27 to 30, ***characterized in*** that the motor (41) is a hydraulic motor fed by a hydraulic pump (58) housed on the mower (1).

32. Mower according to at least one of Claims 1 to 31, ***characterized in*** that the rotational speed of the rotor (34) is higher than 120 rpm.

33. Mower according to Claim 32, ***characterized in*** that the speed of rotation of the rotor (34) is approximately 240 rpm.

34. Mower according to at least one of Claims 1 to 33, ***characterized in*** that the harvesting mechanism (62) additionally comprises a device (21) for conditioning the cut product arranged behind the cutterbar (18).

35. Mower according to Claim 34, ***characterized in*** that the conditioning device (21) comprises two conditioning rollers (22, 23) between which the product cut by the cutting members (2,3,4,5,6) of the cutterbar (18) passes.

## Patentansprüche

1. Mähmaschine mit mindestens einem Erntemechanismus (62), der
- einen Mähbalken (18), der sich quer zur Arbeitsrichtung (A) erstreckt und mit Schneidgliedern (2, 3, 4, 5, 6) und einem Gehäuse (7) versehen ist, wobei die Schineidglieder (2, 3, 4, 5, 6) jeweils an der Oberseite des Gehäuses (7) um eine nach oben ausgerichtete jeweilige Achse (8) drehbar geführt werden und von Übertragungsmitteln, die in dem Gehäuse (7) angeordnete Elemente aufweisen, drehangetrieben werden, wobei diese Schneidglieder (2, 3, 4, 5, 6) jeweils einen Schneidwerkzeugträger (11, 12) aufweisen, der an seinem Umfang mit mindestens einem Schneidwerkzeug (13) versehen ist, wobei die Schneidwerkzeuge (13) der Schneidglieder (2, 3, 4, 5, 6) eine Schnittebene (35) erzeugen, und
- einen Rotor (34) mit einem Zentralträger (37), der an seinem Umfang Mittel (36) aufweist, die zum Abtransport des durch die Schneidwerkzeuge (13) geschnittenen Gutes beitragen, wobei der Rotor (34) dazu über der Schnittebene (35) zumindest im wesentlichen parallel zu dem Mähbalken (18) angeordnet ist und so drehangetrieben wird, daß sich die Mittel (36), an der Vorderseite des Rotors (34), nach unten, bis in die Nähe der Schnittebene (35) bewegen,
umfaßt,
***dadurch gekennzeichnet***, daß:
- die Längsachse (34A) des Rotors (34) sich zumindest im wesentlichen senkrecht über der vorderen Position der Schneidwerkzeuge (13) erstreckt, wenn die Schnittebene (35) horizontal ausgerichtet ist, und
- die zum Abtransport des Schnittgutes beitragenden Mittel (36) mit dem Zentralträger (37) des Rotors (34) starr verbunden sind und das durch die Schneidwerkzeuge (13) geschnittene Gut zu den Schneidwerkzeugträger (11, 12) der Schineidglieder (2, 3, 4, 5, 6) führen.

2. Mähmaschine nach Anspruch 1, ***dadurch gekennzeichnet***, daß die Mittel (36) mittels Befestigungsgliedern (49) mit dem Zentralträger (37) verbunden sind.

3. Mähmaschine nach Anspruch 2, ***dadurch gekennzeichnet,*** daß die Befestigungsglieder (49) Schrauben sind, die sich zumindest im wesentlichen in zur Längsachse (34A) des Rotors (34) orthogonal verlaufenden Ebenen erstrecken.

4. Mähmaschine nach mindestens einem der Ansprüche 1 bis 3, ***dadurch gekennzeichnet,*** daß der Zentralträger (37) des Rotors (34) einen zumindest im wesentlichen zylindrischen mittleren Kern (47) aufweist.

5. Mähmaschine nach Anspruch 4, ***dadurch gekennzeichnet***, daß der Außenradius (50) des mittleren Kerns (47) ca. 7 cm beträgt.

6. Mähmaschine nach mindestens einem der Ansprüche 1 bis 5, ***dadurch gekennzeichnet***, daß der Zentralträger (37) des Rotors (34) an seinem Umfang flache Elemente (48) aufweist, die sich zumindest im wesentlichen parallel zur Längsachse (34A) des Rotors (34) erstrecken, um die zum Abtransport des Schnittguts beitragenden Mittel (36) festzuhalten.

7. Mähmaschine nach Anspruch 6, ***dadurch gekennzeichnet***, daß die flachen Elemente (48) zumindest im wesentlichen radial ausgerichtet sind.

8. Mähmaschine nach Anspruch 6 oder 7, ***dadurch gekennzeichnet***, daß die flachen Elemente (48) gleichmäßig um den Umfang des mittleren Kerns (47) des Zentralträgers (37) des Rotors (34) verteilt sind.

9. Mähmaschine nach mindestens einem der Ansprüche 1 bis 8, ***dadurch gekennzeichnet***, daß der Außenradius (51) des Zentralträgers (37) des Rotors (34) zwischen 7 cm und 20 cm liegt.

10. Mähmaschine nach Anspruch 9, ***dadurch gekennzeichnet***, daß der Außenradius (51) des Zentralträgers (37) des Rotors (34) ca. 11 cm beträgt.

11. Mähmaschine nach mindestens einem der Ansprüche 1 bis 10, ***dadurch gekennzeichnet***, daß der vordere Teil (36F) der zum Abtransport des Schnittgutes beitragenden Mittel (36) bezüglich der Drehrichtung (43) des Rotors (34), und entlang seiner Längsachse (34A) betrachtet, bei der Drehung des Rotors (34) nach hinten ausgerichtet ist.

12. Mähmaschine nach Anspruch 11, ***dadurch gekennzeichnet***, daß insbesondere das äußere Ende des vorderen Teils (36F) der zum Abtransport des Schnittgutes beitragenden Mittel (36) nach hinten ausgerichtet ist.

13. Mähmaschine nach Anspruch 12, ***dadurch gekennzeichnet***, daß das äußere Ende des vorderen Teils (36F) der zum Abtransport des Schnittgutes beitragenden Mittel (36) nach hinten gekrümmt ist.

14. Mähmaschine nach mindestens einem der Ansprüche 1 bis 13, ***dadurch gekennzeichnet***, daß der vordere Teil (36F) der zum Abtransport des Schnittgutes beitragenden Mittel (36) bezüglich der Drehrichtung (43) des Rotors (34), und entlang seiner Längsachse (34A) betrachtet, über zumindest im wesentlichen seine gesamte Länge nach hinten gekrümmt ist.

15. Mähmaschine nach Anspruch 14, ***dadurch gekennzeichnet***, daß der Krümmungradius (45) des vorderen Teils (36F) der zum Abtransport des Schnittgutes beitragenden Mittel (36) zwischen 7 cm und 50 cm liegt.

16. Mähmaschine nach mindestens einem der Ansprüche 1 bis 15, ***dadurch gekennzeichnet***, daß die zum Abtransport des Schnittgutes beitragenden Mittel (36) aus Fingern (42) gebildet sind.

17. Mähmaschine nach Anspruch 16, ***dadurch gekennzeichnet***, daß die Finger (42) zumindest im wesentlichen starr sind.

18. Mähmaschine nach Anspruch 16 oder 17, ***dadurch gekennzeichnet***, daß die Finger (42) einen gekrümmten Querschnitt aufweisen.

19. Mähmaschine nach Anspruch 18, ***dadurch gekennzeichnet***, daß der Durchmesser (44) der Finger (42) ca. 1 cm beträgt.

20. Mähmaschine nach mindestens einem der Ansprüche 1 bis 19, ***dadurch gekennzeichnet***, daß sich zwei zum Abtransport des Schnittgutes beitragende, benachbarte Mittel (36), in einer orthogonal zur Längsachse (34A) des Rotors (34) verlaufenden Richtung betrachtet, in Rotationsebenen befinden, die in einem Abstand (46) von weniger als 15 cm voneinander angeordnet sind.

21. Mähmaschine nach mindestens einem der Ansprüche 1 bis 20, ***dadurch gekennzeichnet***, daß die Endschneidglieder (2,6) im Gegensatz zu den sich dazwischen befindenden Schneidgliedern (3, 4, 5) jeweils von einer Drehtrommel (14, 15) überragt werden und daß sich die zum Abtransport des Schnittgutes beitragenden Mittel (36) über eine Länge erstrecken, die zumindest im wesentlichen gleich dem die beiden Drehtrommeln (14, 15) voneinander trennenden Abstand ist.

22. Mähmaschine nach mindestens einem der Ansprüche 1 bis 21, ***dadurch gekennzeichnet***, daß die zum Abtransport des Schnittgutes beitragenden Mittel (36), entlang der Längsachse (34A) des Rotors (34) betrachtet, so zueinander versetzt sind, daß eine Schraubenlinie gebildet wird, die einen kontinuierlichen Abtransport des Schnittgutes begünstigt.

23. Mähmaschine nach mindestens einem der Ansprüche 1 bis 22, ***dadurch gekennzeichnet***, daß der Außendurchmesser (52) des Rotors (34) zwischen 12 cm und 35 cm liegt.

24. Mähmaschine nach Anspruch 23, ***dadurch gekennzeichnet***, daß der Außenradius (52) des Rotors (34) ca. 25 cm beträgt.

25. Mähmaschine nach mindestens einem der Ansprüche 1 bis 24, ***dadurch gekennzeichnet***, daß der die unterste Stelle (53) des Rotors (34) von der Schnittebene (35) trennende Abstand (54) weniger als 15 cm beträgt.

26. Mähmaschine nach Anspruch 25, ***dadurch gekennzeichnet***, daß der Abstand (54) ca. 5 cm beträgt.

27. Mähmaschine nach mindestens einem der Ansprüche 1 bis 26, ***dadurch gekennzeichnet***, daß der Rotor (34) von einem Motor (41) angetrieben wird.

28. Mähmaschine nach Anspruch 27, ***dadurch gekennzeichnet***, daß der Motor (41) zumindest im wesentlichen in der Nähe eines der beiden Längsenden des Rotors (34) angeordnet ist.

29. Mähmaschine nach Anspruch 28, ***dadurch gekennzeichnet***, daß der Motor (41) zumindest im wesentlichen auf der Längsachse (34A) des Rotors (34) zentriert ist.

30. Mähmaschine nach Anspruch 29, ***dadurch gekennzeichnet***, daß die Antriebswelle (56) des Motors (41) mittels einer Kupplung (57) drehfest mit dem Zentralträger (37) des Rotors (34) verbunden ist.

31. Mähmaschine nach mindestens einem der Ansprüche 27 bis 30, ***dadurch gekennzeichnet***, daß der Motor (41) einen Hydraulikmotor ist, der durch eine an der Mähmaschine (1) angeordnete Hydraulikpumpe (58) versorgt wird.

32. Mähmaschine nach mindestens einem der Ansprüche 1 bis 31, ***dadurch gekennzeichnet***, daß die Drehzahl des Rotors (34) mehr als 120 U/min beträgt.

33. Mähmaschine nach Anspruch 32, ***dadurch gekennzeichnet***, daß die Drehzahl des Rotors (34) ca. 240 U/min beträgt.

34. Mähmaschine nach mindestens einem der Ansprüche 1 bis 33, ***dadurch gekennzeichnet***, daß der Erntemechanismus (62) des weiteren eine Vorrichtung (21) zur Behandlung des Schnittgutes enthält, die hinter dem Mähbalken (18) angeordnet ist.

35. Mähmaschine nach Anspruch 34, ***dadurch gekennzeichnet***, daß die Behandlungsvorrichtung (21) zwei Aufbereitungswalzen (22, 23) enthält, zwischen denen das von den Schneidgliedern (2, 3, 4, 5, 6) des Mähbalkens (18) geschnittene Gut hindurchläuft.
